# EUROPEAN PATENT APPLICATION

(11) **EP 3 460 439 A1**
(43) Date of publication of application: **27.03.2019**
(21) Application number: 17799041.3
(22) Date of filing: 04.04.2017
(51) Int. Cl.: G01M 3/04, F15B 20/00, G01M 3/38

(54) **LIQUID LEAKAGE DETECTION DEVICE**

(30) Priority: 16.05.2016 JP 2016097588
(71) Applicant: KYB Corporation, Tokyo 105-6111 (JP)
(72) Inventor: OOKI Norikazu, Tokyo 105-6111 (JP)
(74) Representative: MFG Patentanwälte Meyer-Wildhagen Meggle-Freund Gerhard PartG mbB
(86) International application number: PCT/JP2017/014027
(87) International publication number: WO 2017/199607

(57) **Abstract**

A liquid leakage detection device of the present invention includes a sensor unit (12) and a determination unit (13). The sensor unit (12) is configured to detect liquid between seals of a plurality of seals (8) and (9) that are arranged aligned in an axial direction on an inner circumference of a shaft supporting member (7), which is an inner circumference of the shaft supporting member (7) into which a shaft (2) is movably inserted, to seal an outer circumference of the shaft (2). The determination unit (13) is configured to determine whether or not liquid leaks, through detection of liquid by the sensor unit (12).

## Description

### Technical Field

The present invention relates to an improvement of a liquid leakage detection device.

### Background Art

In a hydraulic cylinder or the like having a cylinder and a rod that enters and leaves the cylinder, leakage of hydraulic oil from inside the cylinder is prevented by sealing an outer circumference of the rod with a main seal. Using a hydraulic cylinder or the like over a long period of time may deteriorate sealability of the main seal, or causes damage of the outer circumference of the rod, resulting in a leakage of a small amount of hydraulic oil from inside the cylinder.

As a liquid leakage detection device that automatically detects such leakage of hydraulic oil, for example, as disclosed in JP H06-207608, there is a detection device that is provided with a funnel-shaped receiving part below a cylinder end, stores, in a bottomed tubular measuring part, hydraulic oil leaking from an outer circumference of a rod, and measures an amount of leakage per unit time. Then, when the amount of leakage per unit time exceeds an allowable value, the liquid leakage detection device determines that liquid leakage has occurred and performs notification (see, for example, Patent Literature 1).

### Summary of the Invention

Since liquid leakage affects an operation of hydraulic equipment, it is desired to detect liquid leakage at an early stage of the liquid leakage as much as possible. However, in the conventional liquid leakage detection device, since a minimum amount of hydraulic oil required for measuring the amount of leakage must be stored in the measuring part, it takes time to detect the liquid leakage and leakage cannot be found at an early stage.

In addition, in the conventional liquid leakage detection device, the liquid leakage is determined afterward by measuring an actual leakage amount of hydraulic oil, and it is impossible to recognize a condition of the main seal and the outer circumference of the rod. Therefore, liquid leakage cannot be predicted.

The present invention has been made to solve the above problems, an object of the present invention is to provide a liquid leakage detection device capable of not only detecting liquid leakage at an early stage but also predicting liquid leakage.

In order to achieve the above-mentioned object, a liquid leakage detection device of the present invention includes a sensor unit and a determination unit. The sensor unit is configured to detect liquid between seals of a plurality of seals that are arranged aligned in an axial direction on an inner circumference of a shaft supporting member to seal an outer circumference of a shaft, the shaft being movably inserted into the inner circumference of the shaft supporting member. The determination unit is configured to determine whether or not the liquid leaks, through detection of liquid by the sensor unit. The liquid leakage detection device configured as described above enables liquid detection between the seals.

### Brief Description of Drawings

Fig. 1 is a schematic cross-sectional view of a damper applied with a liquid leakage detection device according to an embodiment.
Fig. 2 is an enlarged cross-sectional view of a liquid leakage detection device according to an embodiment.
Fig. 3 is an enlarged cross-sectional view of a liquid leakage detection device in a modification of an embodiment.

### Description of Embodiments

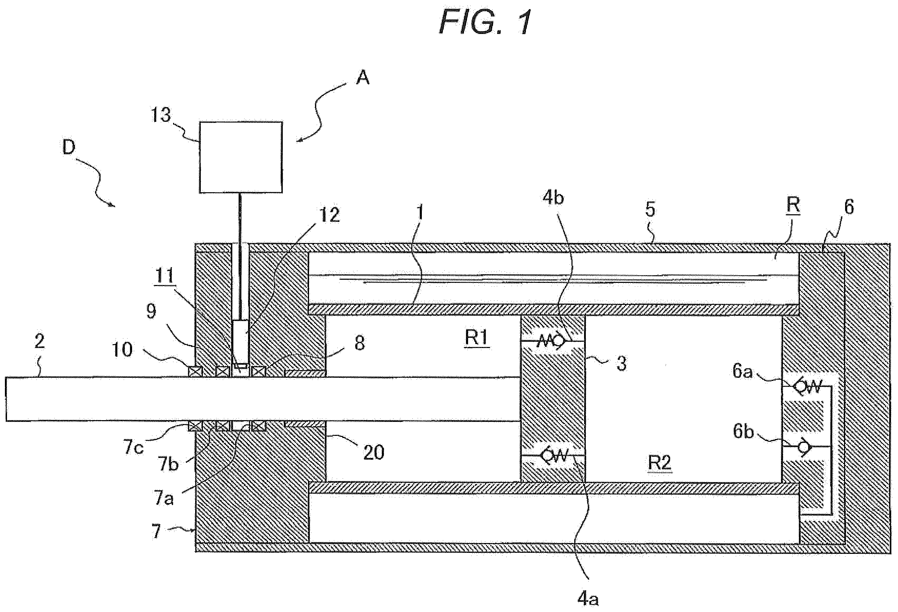

Hereinafter, the present invention will be described with reference to embodiments shown in the drawings. A liquid leakage detection device A of the present invention is applied to a damper D. As shown in Fig. 1, the damper D includes: a tubular cylinder 1; a rod 2 axially movable relative to the cylinder 1 and configured to enter and leave the cylinder 1; and a piston 3 slidably inserted into the cylinder 1 and connected to the rod 2. Further, in the case of this example, the damper D is filled with hydraulic oil as liquid in the cylinder 1.

Specifically, the piston 3 slidably inserted into the cylinder 1 and connected to the rod 2 partitions the inside of the cylinder 1 of the damper D into an extension-side chamber R1 and a compression-side chamber R2 that are filled with hydraulic oil. Further, in the piston 3, there are provided a damping passage 4a that gives resistance to a flow of hydraulic oil from the extension-side chamber R1 toward the compression-side chamber R2; and a damping passage 4b that gives resistance to a flow of the hydraulic oil from the compression-side chamber R2 toward the extension-side chamber R1. In this example, an outer cylinder 5 having a bottomed tubular shape is provided on an outer circumference of the cylinder 1, and a reservoir R accommodating hydraulic oil and gas is provided between the cylinder 1 and the outer cylinder 5. Further, one end of the cylinder 1 and the outer cylinder 5 is attached with an annular rod guide 7 as a shaft supporting member that movably supports the rod 2. Another end of the cylinder 1 is provided with a valve case 6 that partitions the compression-side chamber R2 from the reservoir R. An end of the cylinder 1 is provided with a valve case 6 that partitions the compression-side chamber R2 from the reservoir R. In the valve case 6, there are provided a discharge passage 6a that gives resistance to a flow of hydraulic oil from the compression-side chamber R2 toward the reservoir R; and a suction passage 6b that permits only a flow of hydraulic oil from the reservoir R toward the compression-side chamber R2.

In an extending operation of the damper D configured as described above, hydraulic oil moves from the extension-side chamber R1 to the compression-side chamber R2 via the damping passage 4a, and hydraulic oil of a volume corresponding to withdrawal of the rod 2 from the cylinder 1 is supplied from the reservoir R to the compression-side chamber R2 via the suction passage 6b. Consequently, the damper D gives resistance to the flow of the hydraulic oil moving from the extension-side chamber R1 to the compression-side chamber R2 at the damping passage 4a, and increases pressure in the extension-side chamber R1 to generate a pressure difference between the extension-side chamber R1 and the compression-side chamber R2, to exert an expansion side damping force.

Conversely, in a contracting operation of the damper D, the hydraulic oil moves from the compression-side chamber R2 to the extension-side chamber R1 via the damping passage 4b, and hydraulic oil of a volume corresponding to entering of the rod 2 into the cylinder 1 is discharged from the compression-side chamber R2 to the reservoir R via the discharge passage 6a. Consequently, at a time of contraction of the damper D, a resistance is applied to the flow of the hydraulic oil moving from the compression-side chamber R2 to the reservoir R in the discharge passage 6a to increase a pressure in the compression-side chamber R2, and a resistance is imparted to the flow of the fluid from the compression-side chamber R2 to the extension-side chamber R1 in the damping passage 4b, generating a pressure difference between the compression-side chamber R2 and the extension-side chamber R1, to exert a compression side damping force.

It should be noted that the damper D performs volume compensation of the rod 2 that enters and leaves the cylinder 1 by installing the reservoir R, but the volume compensation of the rod 2 may be performed, for example, by providing a free piston that is slidably inserted into the cylinder 1 to provide an air chamber in the cylinder 1, and changing the volume of the air chamber. Further, the configuration of the damper D is merely an example, and other configurations may be adopted.

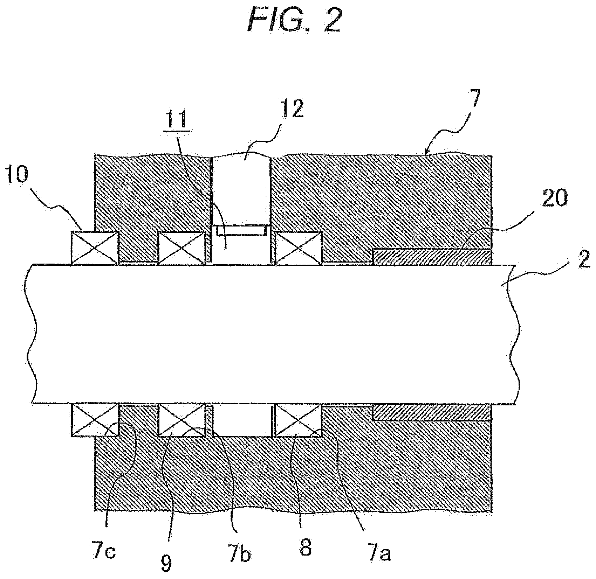

Next, as shown in Figs. 1 and 2, the liquid leakage detection device A of the present embodiment includes a sensor unit 12 and a determination unit 13. The sensor unit 12 is configured to detect liquid between the seals, which is between a buffer ring 8 and a main seal 9 as seals that are arranged aligned in an axial direction on an inner circumference of the annular rod guide 7 fixed to the cylinder 1 of the damper D, to seal an outer circumference of the rod 2 as a shaft. The shaft supporting member is a member that holds a plurality of seals 8 and 9 in sliding contact with the outer circumference of the rod 2 as a shaft on the inner circumference, and movably holds the rod 2. In this case, the rod guide 7 corresponds to the shaft supporting member.

The rod guide 7 is provided at a pipe end of the cylinder 1 and is fixed to the cylinder 1 so as to guide an axial movement of the rod 2 with respect to the cylinder 1. Both the buffer ring 8 and the main seal 9 have an annular shape, and are accommodated in annular grooves 7a and 7b arranged aligned in the axial direction on the inner circumference of the rod guide 7, with the buffer ring 8 first in order from an inner side of the cylinder 1. Further, the buffer ring 8 and the main seal 9 are in sliding contact with the outer circumference of the rod 2 to seal between the rod 2 and the rod guide 7.

The buffer ring 8 is a seal that seals the outer circumference of the rod 2 and suppresses high pressure from acting on the main seal 9 by buffering impulsive high pressure and pressure fluctuations in the cylinder 1. The main seal 9 seals the outer circumference of the rod 2 to prevent leakage of the hydraulic oil from the inside of the cylinder 1.

It should be noted that, on the main seal 9 toward atmosphere, which is an opposite side to the cylinder, there is provided a dust seal 10 mounted in a recess 7c provided at an end of the rod guide 7 on the opposite side to the cylinder. This dust seal 10 is in sliding contact with the outer circumference of the rod 2 and scrapes off the dust attached to the outer circumference of the rod 2 to prevent dust from entering into the cylinder 1.

In addition, on the inner circumference of the rod guide 7 and closer to the cylinder than the buffer ring 8, a tubular bushing 20 in sliding contact with the outer circumference of the rod 2 is mounted, to ensure a smooth axial movement of the rod 2.

Further, in this example, there is provided a liquid storage chamber 11 that is formed by a recess provided between the seals of the buffer ring 8 and the main seal 9 on the inner circumference of the rod guide 7. Then, the sensor unit 12 is configured to detect liquid in the liquid storage chamber 11, and in this example, specifically, the sensor unit 12 is a pressure sensor configured to detect pressure in the liquid storage chamber 11. The determination unit 13 is configured to determine the presence or absence of liquid in the liquid storage chamber 11 based on the pressure detected by the sensor unit 12. For example, there is provided a hole that opens between the buffer ring 8 and the main seal 9 from an outer circumference of the rod guide 7 in a direction perpendicular to the axial direction, this hole serves as the liquid storage chamber 11, and the sensor unit 12 is inserted from an outer circumference of the hole. In this way, formation of the liquid storage chamber 11 in the rod guide 7 and installation of the sensor unit in the rod guide 7 can be easily realized. Although the rod guide 7 as the shaft supporting member is made of one component in this case, but the rod guide 7 may be formed of a plurality of components.

The determination unit 13 includes an arithmetic processing unit that processes a signal indicating a value of pressure received from the sensor unit 12, and grasps the presence or absence of liquid in the liquid storage chamber 11 based on the pressure detected by the sensor unit 12, to determine the presence or absence of liquid leakage. When a sealing function of the buffer ring 8 deteriorates for some reason, and the hydraulic oil passes over the buffer ring 8 and enters between the rod guide 7 and the rod 2, that is, between the seals of the buffer ring 8 and the main seal 9 on the inner circumference of the rod guide 7, the liquid gradually accumulates in the liquid storage chamber 11. When the liquid accumulates in the liquid storage chamber 11, the pressure in the liquid storage chamber 11 increases. Therefore, when the pressure in the liquid storage chamber 11 detected by the sensor unit 12 increases, the determination unit 13 can recognize that the liquid has accumulated in the liquid storage chamber 11. Specifically, the determination unit 13 is provided with a threshold value with respect to the pressure to be detected by the sensor unit 12, and when the pressure becomes equal to or higher than the threshold value, the determination unit 13 determines that the hydraulic oil has passed over the buffer ring 8 and accumulated in the liquid storage chamber 11 due to deterioration of the sealing function of the buffer ring 8.

Therefore, the liquid leakage detection device A can grasp deterioration of the sealing function of the buffer ring 8 before liquid leakage occurs from the main seal 9, detect internal liquid leakage at an early stage, and predict an occurrence of final liquid leakage from the cylinder 1.

Meanwhile, the liquid storage chamber 11 can be omitted since it is possible to predict liquid leakage also by detecting the pressure between the buffer ring 8 and the main seal 9 on the inner circumference of the rod guide 7 as the shaft supporting member by the sensor unit 12, without providing the liquid storage chamber 11.

When the liquid storage chamber 11 is omitted, there is no problem with the sealability of the buffer ring 8. However, even in a situation where an excessive high pressure has acted and only a small amount of hydraulic oil has passed over the buffer ring 8, the pressure between the buffer ring 8 and the main seal 9 may become high pressure, and it is determined that the liquid leaks. On the other hand, when the liquid storage chamber 11 is provided, it can be determined that the liquid leaks when hydraulic oil has accumulated in the liquid storage chamber 11 to some extent. Further, since deterioration of the sealability of the buffer ring 8 chronically causes the hydraulic oil leakage to increase a pressure, the liquid leakage can be accurately detected. In addition, providing the liquid storage chamber 11 enables detection of liquid leakage before the pressure in the liquid storage chamber 11 reaches a high pressure that adversely affects the main seal 9, allowing accurate prediction of liquid leakage while preventing liquid leakage.

Note that a plurality of thresholds may be provided for the pressure to be detected by the sensor unit 12 regardless of whether the liquid storage chamber 11 is installed or not. For example, in a case of providing a threshold value that is set to a high value and has high likelihood of liquid leakage, and a threshold value that is set lower than this value and has a low likelihood of liquid leakage, it can be recognized that a degree of risk of liquid leakage is increased when the pressure detected by the sensor unit 12 is equal to or higher than the low threshold value, while internal liquid leakage due to deterioration of the sealability of the buffer ring 8 can be recognized when the value becomes higher than the high threshold value. In this way, when the sensor unit 12 serves as a pressure sensor, a plurality of threshold values are set for the pressure to be detected, to enable determination of a degree of risk of liquid leakage by utilizing one pressure sensor.

In this example, the sensor unit 12 is a pressure sensor and configured to detect liquid between the seals of the buffer ring 8 and the main seal 9 through the pressure. However, even when the sensor unit 12 is a pressure switch, the determination unit 13 can predict liquid leakage. When a pressure at which the pressure switch is turned ON is set as the threshold value described above, turning ON the pressure switch and receiving the ON signal at the determination unit 13 allows the determination unit 13 to detect liquid leakage similarly to the case where the sensor unit 12 is the pressure sensor. Further, by differently setting the pressure for turning ON by using a plurality of pressure switches, a degree of risk of liquid leakage can be determined according to the number of pressure switches that output ON signals.

In addition, although the determination unit 13 recognizes the presence of liquid between the seals of the buffer ring 8 and the main seal 9 through the pressure detection by the sensor unit 12, the determination unit 13 may detect the presence of liquid through other way than pressure detection, to determine liquid leakage.

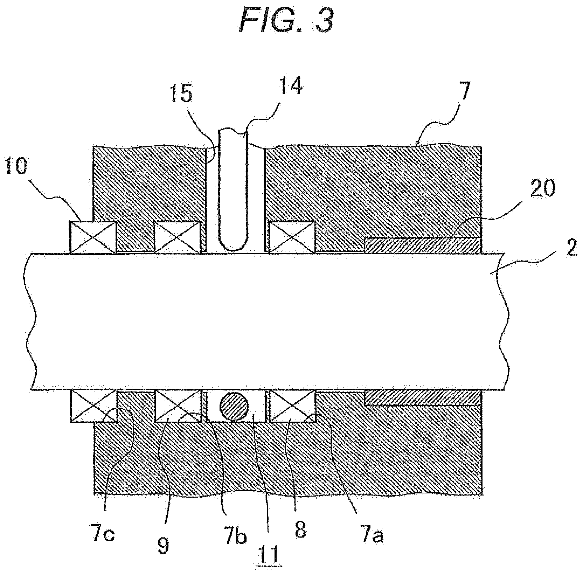

For example, optical fibers can be used to detect the presence of liquid. When liquid adheres to a surface of the optical fiber, a critical angle at which light traveling in the optical fiber leaks outside is reduced, so that the intensity of the light incident on the optical fiber is damped and decreased at an exit. Therefore, as shown in Fig. 3, by forming the liquid storage chamber 11 in an annular shape over the entire inner circumference of the rod guide 7, accommodating an optical fiber 14 as a sensor unit in the liquid storage chamber 11 so as to surround the outer circumference of the rod 2, arranging both ends to protrude from the outer circumference of the rod guide 7 to the outside of the damper D from a hole 15 opening to the liquid storage chamber 11, and allowing light to enter from one end of the optical fiber 14, then the presence or absence of liquid in the liquid storage chamber 11 can be detected through a degree of decrease in the intensity of the light output from another end.

Meanwhile, the liquid storage chamber 11 may be annular even when the pressure sensor is used for the sensor unit 12. When a foreign matter causes a scratch on the rod 2 or the seal such as the buffer ring 8 or the main seal 9, liquid may leak along the scratch. Therefore, forming the liquid storage chamber 11 in an annular shape enables detection of liquid leakage even if liquid leaks from any position in the circumferential direction.

Further, since using level sensor of an electrostatic capacitance type as the sensor unit 12 enables detection of the presence or absence of liquid in the liquid storage chamber 11, the presence or absence of liquid may be detected using such a sensor. Since the level sensor can also detect a liquid amount, it is possible to detect a degree of risk of liquid leakage by detecting the amount of liquid in the liquid storage chamber 11.

In addition, the presence or absence of liquid in the liquid storage chamber 11 may be detected by accommodating the sensor unit 12 as pressure-sensitive conductive rubber in the liquid storage chamber 11, and utilizing a change in electric resistance of the pressure-sensitive conductive rubber caused by deformation of the pressure-sensitive conductive rubber due to a pressure increase in the liquid storage chamber 11.

Meanwhile, in this example, when the dust seal 10 exerts a sealing function for preventing leakage of hydraulic oil in addition to intrusion of dust into the cylinder 1, the sensor unit 12 may be provided between the seals of the dust seal 10 and the main seal 9 in addition to or instead of the installation of the sensor unit 12 between the seals of the buffer ring 8 and the main seal 9. In a case where three or more seals to seal the outer circumference of the rod 2 are provided aligned in the axial direction, the sensor unit 12 may be provided between any selected seals among spaces between adjacent seals (between seals). Providing three or more seals and installing the sensor unit 12 between the plurality of seals allows a seal with a deteriorated seal function to be specified, enabling detection of a liquid leakage point stepwise and prediction of final liquid leakage from the cylinder 1. Moreover, when providing a plurality of sensor units 12, it is preferable to increase liquid detection sensitivity by the sensor unit 12 positioned closer to the outside of the cylinder 1. For example, in the case of using a pressure sensor, by setting such that the threshold value is low for the sensor unit 12 close to the outside, the possibility of liquid leakage can be reduced.

In addition, although the liquid leakage detection device A of the present embodiment is applied to the damper D, the liquid leakage detection device A may be provided on an outer circumference of a rod of a hydraulic device such as a linear actuator driven by hydraulic pressure, and liquid leakage can be detected even when the liquid leakage detection device A is used for the shaft supporting member that holds, in the inner circumference, a seal that axially supports the rotary shaft of a hydraulic pump or a hydraulic motor to seal a shaft.

While the preferred embodiments of the present invention have been described in detail above, modifications, variations, and alterations can be made without departing from the scope of the claims.

This application claims priority based on Japanese Patent Application No. 2016-097588 filed on May 16, 2016, the contents of which are incorporated herein by reference in its entirety.

## Claims

1. A liquid leakage detection device comprising:
a sensor unit configured to detect liquid between seals of a plurality of seals that are arranged aligned in an axial direction on an inner circumference of a shaft supporting member to seal an outer circumference of a shaft, the shaft being movably inserted into the inner circumference of the shaft supporting member; and
a determination unit configured to determine whether or not liquid leaks, through detection of liquid by the sensor unit.

2. The liquid leakage detection device according to claim 1, wherein
the sensor unit is a pressure sensor configured to detect a pressure between the seals.

3. The liquid leakage detection device according to claim 1, further comprising:
a liquid storage chamber provided between the seals on the inner circumference of the shaft supporting member, wherein
the sensor unit detects liquid in the liquid storage chamber.
